# EUROPÄISCHE PATENTSCHRIFT

(11) **EP 2 951 067 B1**
(45) Veröffentlichungstag und Bekanntmachung des Hinweises auf die Patenterteilung: **30.05.2018**
(21) Anmeldenummer: 14752628.9
(22) Anmeldetag: 18.08.2014
(51) Int. Cl.: B60T 1/14, B61H 7/08

(54) **HUBZYLINDER ZUR BETÄTIGUNG EINER MAGNETSCHIENENBREMSE**
LIFTING CYLINDER FOR ACTUATING A MAGNETIC RAIL BRAKE
VÉRIN HYDRAULIQUE D'ACTIONNEMENT D'UN FREIN ÉLECTROMAGNÉTIQUE SUR RAILS

(30) Priorität: 22.08.2013 DE 202013103797 U
(43) Veröffentlichungstag der Anmeldung: 09.12.2015
(73) Patentinhaber: Faiveley Transport Witten GmbH, 58454 Witten (DE); Tecair Holding B.V., 9206 BB Drachten (NL)
(72) Erfinder: MEHLAN, Andreas, 59425 Unna (DE); PAKE, Detlev, 42857 Remscheid (DE); MARKUS, Marco, NL-9206 BB Drachten (NL)
(74) Vertreter: RGTH
(86) Internationale Anmeldenummer: PCT/EP2014/067568
(87) Internationale Veröffentlichungsnummer: WO 2015/024902

(56) Entgegenhaltungen:
- DE-A1- 2 916 460
- DE-A1- 19 518 893
- GB-A- 1 250 139
- GB-A- 1 270 327
- US-A- 1 960 595
- US-A- 2 048 329
- VAN OOSTVEEN H ET AL: "ERFAHRUNGEN MIT PERMANENTMAGNET-SCHIENENBREMSEN", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 121, Nr. 12, 1. Dezember 1997 (1997-12-01), Seiten 613-617, XP000724981, ISSN: 0941-0589

## Beschreibung

Die vorliegende Erfindung betrifft einen Hubzylinder zur Betätigung einer Magnetschienenbremse eines Schienenfahrzeugs, umfassend einen Zylinderkörper, in dem ein Kolben in einer Hubachse bewegbar ist, wobei durch den Kolben eine mit Druckmittel beaufschlagbare Arbeitsdruckkammer im Zylinderkörper beweglich begrenzbar ist, und wobei am Kolben eine Kolbenstange angebunden ist, die mit einem freien Ende mit der Magnetschienenbremse verbindbar ist, und wobei der Kolben durch Druckbeaufschlagung der Arbeitsdruckkammer von einer die Magnetschienenbremse anhebenden Position in eine die Magnetschienenbremse absenkende Position verfahrbar ist.

### Stand der Technik

Hubzylinder zur Betätigung von Magnetschienenbremsen werden eingesetzt, um die Magnetschienenbremse durch Betätigung des Hubzylinders von einer angehobenen Position beabstandet zu einer Schiene in eine abgesenkte Position zu verfahren, um die Magnetschienenbremse in Kontakt mit der Schiene zu bringen. Der Hubzylinder kann dabei Bestandteil einer Schalteinrichtung zur pneumatischen Betätigung der Magnetschienenbremse sein, wobei die Magnetschienenbremse und der Hubzylinder an der Unterseite eines Schienenfahrzeugs angeordnet sind. Im Ruhezustand befinden sich die Magnetschienenbremsen unterhalb des Schienenfahrzeugs in einer gewissen Höhe über der Schiene, und eine Magnetschienenbremse, die beispielsweise zwei kufenartige Bremsleisten umfassen kann, die auf jeweiligen Schienen aufsetzen können, können mit mehreren gleichzeitig aktivierbaren Hubzylindern verbunden sein. Muss beispielsweise eine Notbremsung in das Schienenfahrzeug eingeleitet werden, so werden die Arbeitsdruckkammern der Hubzylinder druckbeaufschlagt, sodass der Kolben mit der Kolbenstange im Zylinderkörper verfahren wird und sodass die Kolbenstange aus dem Zylinderkörper herausfährt. Das freie Ende der Kolbenstange kann dabei direkt oder indirekt mit der Magnetschienenbremse in Verbindung gebracht sein. Damit kann bei entsprechender Druckbeaufschlagung der Arbeitsdruckkammer des Hubzylinders die Magnetschienenbremse in eine Arbeitsposition abgesenkt werden, wobei erst mittels einer Magnetkraft die Magnetschienenbremse mit einer hohen Kontaktkraft auf die Oberseite der Schiene gezogen wird, auf der das Schienenfahrzeug fährt, wodurch das Schienenfahrzeug vergleichsweise schnell zum Stand gebracht werden kann. Aus der GB 1250139 A ist ein Steuerkreis für eine Magnetschienenbremse umfassend einen von einer pneumatisch betreibbaren Vorrichtung getragenen Elektromagneten bekannt, wobei eine Feder den Brems-Elektromagneten in einer angehobenen Position hält.

Die DE 2916460 A1 offenbart einen Hubzylinder für Magnetschienenbremsen für Schienenfahrzeuge, wobei Druckfedern in einem Beaufschlagungsraum eines Kolbens abgekehrten Raum angeordnet sind, und wobei im Ringraum zwischen den dem Kolben zugekehrten Enden der Federn ein hülsenförmiger Teil eines hülsenförmigen Federtellers angeordnet ist.

Eine Schienenreinigungsvorrichtung umfassend einen Hubzylinder ist aus der GB 1 270 327 A bekannt.

Die DE 19518893 A1 offenbart eine Magnetschienenbremse für ein Schienenfahrzeug, die zumindest einen Betätigungszylinder mit einem Betätigungskolben hat, über den eine Magneteinrichtung mit einem Gleitschuh auf eine Schiene absenkbar ist.

Im Betrieb von Schienenfahrzeugen hat sich gezeigt, dass die Magnetschienenbremsen über einen oder über mehrere Hubzylinder am Schienenfahrzeug, insbesondere meist am Drehgestell des Schienenfahrzeugs, aufgenommen sind, bei extremen Vertikalbeschleunigungen in Schwingung gelangen können. Grundsätzlich müssen die Magnetschienenbremsen jedoch in der Hochlage, das heißt in der angehobenen Position, beabstandet zur Schiene gehalten werden, um einen Kontakt mit der Schiene im Normalbetrieb des Schienenfahrzeugs zu vermeiden. Hierzu können in dem oder den mehreren Hubzylindern Schraubenfedern eingebracht sein, durch die der Kolben in der oberen Position gehalten wird, die mit der angehobenen Position der Magnetschienenbremse korrespondiert. Muss die Magnetschienenbremse mit der Schiene in Kontakt gebracht werden, so wird über die Druckbeaufschlagung der Arbeitsdruckkammer die Magnetschienenbremse zunächst abgesenkt, während die Schraubenfeder komprimiert. Anschließend kann durch Einschalten des oder der
Magnetelemente der Magnetschienenbremse unter weiterer Absenkung der Magnetschienenbremse diese in Kontakt mit der Schiene gebracht werden.

Auch sind Systeme bekannt, bei denen die angehobene Position der Magnetschienenbremse durch eine dauerhafte Druckbeaufschlagung einer Hochlagendruckkammer aufrechterhalten wird, wobei die Hochlagendruckkammer der Arbeitsdruckkammer am Kolben gegenüberliegt, und die Arbeitsdruckkammer bildet dabei die sogenannte Tieflagendruckkammer, sodass bei Beaufschlagung der Tieflagendruckkammer der Kolben und mit diesem die Magnetschienenbremse in die abgesenkte Position überführt wird.

Nachteilhaft ist bei der Anordnung von Schraubenfedern zur Aufrechterhaltung der Hochlage der Magnetschienenbremse die Schwingungsanfälligkeit des massebehafteten und federnden Systems aus Magnetschienenbremse und Schraubenfeder. Wird ein pneumatischer Druck verwendet, über den der Kolben und damit die Magnetschienenbremse in der angehobenen Position gehalten werden, so ist nachteilhafterweise eine pneumatische Druckversorgung der Hubzylinder dauerhaft notwendig.

### Offenbarung der Erfindung: Aufgabe, Lösung, Vorteile

Aufgabe der Erfindung ist die Weiterbildung eines Hubzylinders zur Betätigung einer Magnetschienenbremse, durch den die Aufrechterhaltung einer Haltekraft zur Haltung der Magnetschienenbremse in der angehobenen Position sichergestellt ist. Insbesondere ist es die Aufgabe, eine schnelle und einsatzsichere Aktivierung der Magnetschienenbremse zu gewährleisten, die möglichst bereits durch einfache Druckbeaufschlagung der Arbeitsdruckkammer des Hubzylinders möglich wird.

Diese Aufgabe wird ausgehend von einem Hubzylinder zur Betätigung einer Magnetschienenbremse gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass im Zylinderkörper Haltemittel eingebracht sind, durch die der Kolben in der die Magnetschienenbremse anhebenden Position formschlüssig haltbar sind.

Die Erfindung geht dabei von dem Gedanken aus, Haltemittel im Zylinderkörper zu integrieren, durch die der Kolben in der die Magnetschienenbremse anhebenden Position durch Bildung eines Formschlusses gehalten werden kann. Die formschließenden Haltemittel können dabei so ausgeführt sein, dass keine im Normalbetrieb des Schienenfahrzeugs dauerhafte Ansteuerung des Hubzylinders erforderlich ist. Die Haltemittel können selbstaktivierend ausgebildet sein, und fährt der Kolben in die obere Position, die mit einem minimalen Volumen der Arbeitsdruckkammer korrespondiert, so kann sich der Formschluss zwischen beispielsweise dem Zylinderkörper und dem Kolben bilden, und die formschließenden Haltemittel können beispielsweise die Haltekraft einer Schraubenfeder unterstützen, die den Kolben ebenfalls in die die Magnetschienenbremse angehobene Position vorspannt. So verbleibt die Magnetschienenbremse auch bei extremen Vertikalbeschleunigungen in der angehobenen Position.

Beispielsweise können die Haltemittel wenigstens einen Formschlusskörper aufweisen, der zwischen einer den Kolben freigebenden Position und einer den Kolben haltenden Position veränderlich ist. Die Formschlusskörper können als Klemmkörper wirken, durch die hohe Haltekräfte zwischen dem Kolben und dem Zylinderkörper übertragen werden können, insbesondere wenn durch hohe Vertikalbeschleunigungen entsprechend hohe Zugkräfte in die Kolbenstange eingeleitet werden. Die Haltemittel können zur Wechselwirkung mit dem wenigstens einen Formschlusskörper weiterhin ein über einen Steuerdruck betätigbares Steuerglied aufweisen, das mit dem wenigstens einen Formschlusskörper zur Bildung des Formschlusses in Wechselwirkung bringbar ist. Die Wechselwirkungskräfte zwischen dem Steuerglied und dem Formschlusskörper können dabei um ein Vielfaches geringer ausgebildet sein als die Haltekräfte zwischen dem Kolben und dem Zylinderkörper, die über den wenigstens einen Formschlusskörper übertragen werden. Damit entsteht zwischen dem Steuerglied und dem wenigstens einen Formschlusskörper in Wirkverbindung mit dem Kolben und dem Zylinderkörper ein schaltbarer Kraftverstärker, und es kann der Formschluss zwischen dem Kolben und dem Zylinderkörper durch geringe Steuerkräfte, die auf das Steuerglied aufgebracht werden müssen, gehalten oder unterbrochen werden.

Mit besonderem Vorteil kann der Kolben eine Formschlussanformung aufweisen, die mit dem wenigstens einen Formschlusskörper zur Bildung des Formschlusses in Wechselwirkung bringbar ist. Beispielsweise können mehrere Formschlusskörper vorgesehen sein, die kugelförmig, zylinderförmig, rechteckig ausgebildet sind und/oder die Endbereiche aufweisen, die spitz oder ballig ausgebildet sind. Die Formschlusskörper können in einem Käfigabschnitt beispielsweise an einem Endelement des Zylinderkörpers beabstandet zueinander und das Steuerglied umschließend aufgenommen sein. Beispielsweise können im Käfigabschnitt zehn Formschlusskörper eingebracht sein, und jeder der Formschlusskörper bildet ein Kraftübertragungselement zwischen der Formschlussanformung am Kolben und dem Käfigabschnitt, wobei die Formschlusskörper durch eine entsprechende Kontur am Steuerglied im Kraftfluss zwischen der Formschlussanformung am Kolben und dem Käfigabschnitt in Position gehalten werden.

Gemäß einer bevorzugten Ausführungsvariante des Hubzylinders kann dieser einen Zylinderkörper umfassen, der wenigstens einen Rohrabschnitt aufweist. Der Rohrabschnitt kann auf einer ersten Endseite das Endelement aufweisen, das den Rohrabschnitt druckdicht verschließt. Auf der der Anordnung des Endelementes gegenüberliegenden zweiten Endseite des Rohrabschnittes kann unter Herausführung der Kolbenstange ein den Rohrabschnitt verschließendes Verschlusselement vorgesehen sein, wobei die Haltemittel zur formschlüssigen Klemmung des Kolbens im Endelement gegenüberliegend zur Kolbenstange eingebracht sein können.

Beispielsweise kann der Kolben des Hubzylinders topfförmig ausgebildet sein und eine mittige Aufnahmevertiefung aufweisen, in die der Käfigabschnitt des Endelementes eintauchen kann. Erst dann können die beispielsweise Formschlusskörper, die im Käfigabschnitt des Endelementes einsitzen, mit der Formschlussanformung am Kolben in Kontakt gebracht werden. Das Eintauchen des Käfigabschnittes in die Aufnahmevertiefung erfolgt dabei erst dann, wenn der Kolben in die obere Position gefahren wird, in der die Magnetschienenbremse ihre angehobene Position einnimmt.

Das Steuerglied kann als Hubkolben ausgebildet sein, der in einer zylinderförmigen Hubkolbenführung hubbeweglich geführt ist, wobei die Hubkolbenführung vorteilhafterweise im Endelement eingebracht ist. Die Hubkolbenführung kann dabei so im Endelement eingebracht sein, dass der Käfigabschnitt sich an die Hubkolbenführung anschließt oder einen Teil der Hubkolbenführung bildet, sodass die Formschlusskörper, die in entsprechende Aufnahmeaussparungen im Käfigabschnitt aufgenommen sind, um den Hubkolben herum beispielsweise gleichverteilt angeordnet sind. Der Hubkolben kann dabei dauerhaft in Kontakt mit den Formschlusskörpern gehalten sein, und beispielsweise kann die klemmende oder freigebende Position der Formschlusskörper über Abschnitte mit unterschiedlichen Durchmessern am Hubkolben hin- und her geschaltet werden. So kann beispielsweise über einen Abschnitt des Hubkolbens mit einem größeren Durchmesser bewirkt werden, dass die Formschlusskörper in Wirkverbindung mit der Formschlussanformung am Hubkolben gehalten werden, und wird der Hubkolben in der Hubposition verändert, können die Formschlusskörper mit einem kleineren Durchmesser des Hubkolbens wechselwirken, wodurch diese geringfügig nach innen in den Käfigabschnitt eintreten können, und außer Kontakt mit der Formschlussanformung am Hubkolben gelangen. Dadurch wird der Kolben freigegeben und kann in die Position fahren, die der abgesenkten Position der Magnetschienenbremse entspricht, wodurch der Käfigabschnitt des Endelementes aus der Aufnahmevertiefung des Kolbens herausfährt.

Nach einer besonders vorteilhaften Weiterbildung des erfindungsgemäßen Hubzylinders kann der Hubkolben eine Steuerfläche aufweisen, die mit der Arbeitsdruckkammer fluidisch kommunizieren kann. Dabei kann die Steuerfläche durch einen Fluiddruck in der Arbeitsdruckkammer mit Druck beaufschlagbar sein, wodurch der Hubkolben von einer den wenigstens einen Formschlusskörper sperrenden Stellung in eine den Formschlusskörper freigebenden Stellung überführbar ist. Beispielsweise kann der Hubkolben abdichtend in der Hubkolbenführung im Endelement eingebracht sein, und wird die Arbeitsdruckkammer druckbeaufschlagt, so wirkt der Arbeitsdruck in der Arbeitsdruckkammer gleichermaßen gegen die Steuerfläche, die in der oberen Position des Kolbens in die Aufnahmevertiefung im Kolben hinein weist. Durch die Druckverteilung in der Arbeitsdruckkammer erfährt der Bereich in der Aufnahmevertiefung im Kolben den gleichen Druck wie die ansonsten ringförmig den Käfigabschnitt umgebende Arbeitsdruckkammer, sodass der Hubkolben durch den Fluiddruck in der Arbeitsdruckkammer beispielsweise in Richtung der Hubachse bewegt werden kann, um die Formschlusskörper aus dem Kraftfluss zwischen der Formschlussanformung am Kolben und dem Käfigabschnitt des Endelementes freizugeben. Die Steuerfläche des Hubkolbens ist dabei derart bemessen, dass eine Druckbeaufschlagung der Arbeitsdruckkammer zuerst eine Bewegung des Hubkolbens zur Freischaltung der Formschlusskörper bewirkt, um erst anschließend den Kolben im Rohrabschnitt des Zylinderkörpers nach unten zu verfahren.

Zur Rückführung des Hubkolbens kann ein Druckfederelement vorgesehen sein, durch das der Hubkolben in die Position vorgespannt ist, in der der Formschlusskörper den Kolben in der die Magnetschienenbremse angehobenen Position hält. Diese Position des Steuergliedes entspricht der Klemmposition der Formschlusskörper, wobei bei einer Druckbeaufschlagung der Steuerfläche des Steuergliedes das Druckfederelement zunächst komprimiert wird, um die Formschlusskörper durch das Steuerglied freizugeben.

Auf der der Arbeitsdruckkammer abgewandten Seite kann zwischen dem Kolben und dem Verschlusselement eine Schraubenfeder eingebracht sein, die den Kolben in die die Magnetschienenbremse angehobene Position vorspannt. Dabei können die auftretenden Lasten, insbesondere die Gewichtskraft der Magnetschienenbremse, über die Schraubenfeder gehalten werden, sodass nur bei Auftreten von extremen Vertikalbeschleunigungen die Formschlusskörper des Haltemittels ihre klemmende Wirkung erzeugen, um einen Verschleiß des Haltemittels im Hubzylinder zu minimieren.

### Kurze Beschreibung der Zeichnungen

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Fig. 1 ein Ausführungsbeispiel eines Hubzylinders in einem Querschnitt mit einem erfindungsgemäßen Haltemittel in Wirkverbindung zwischen dem Kolben und dem Zylinderkörper, wobei sich der Kolben in einer Position befindet, die der angehobenen Position der Magnetschienenbremse entspricht,
Fig. 2 das Ausführungsbeispiel des Hubzylinders gemäß Fig. 1, wobei sich der Kolben in einer Position befindet, die der abgesenkten Position der Magnetschienenbremse entspricht und
Fig. 3 eine schematische Darstellung der Anordnung des Hubzylinders zwischen einem Drehgestell eines Schienenfahrzeugs und einer Magnetschienenbremse, die über einer Schiene angeordnet gezeigt ist.

### Bevorzugte Ausführungsform(en) der Erfindung

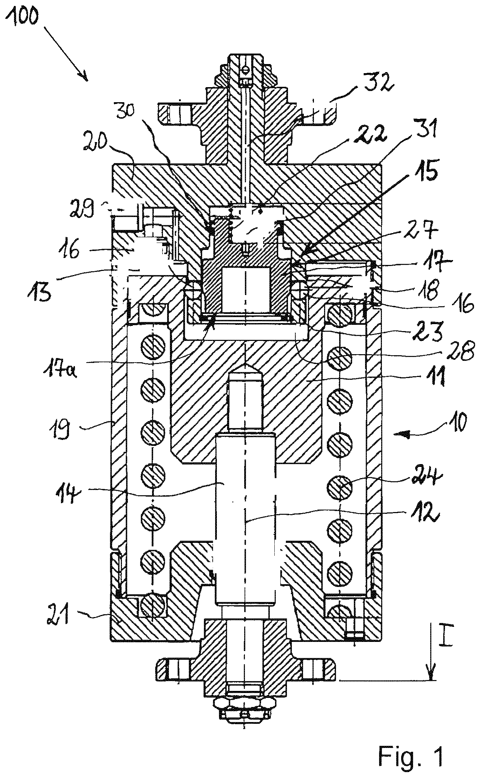

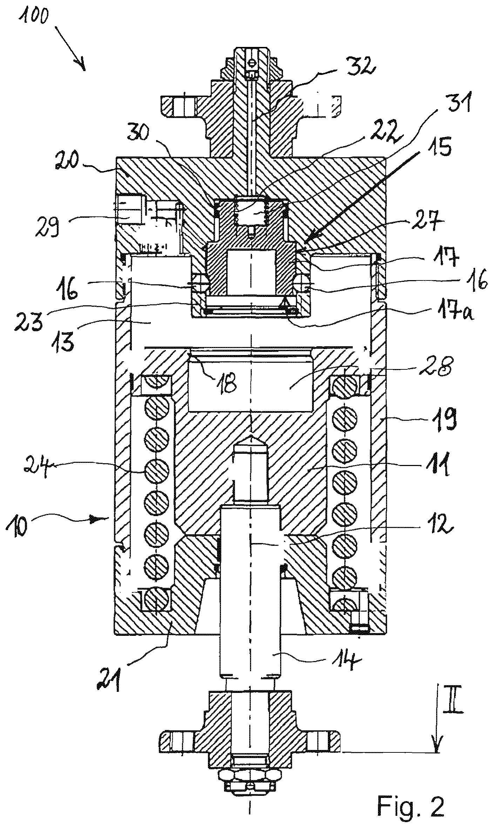

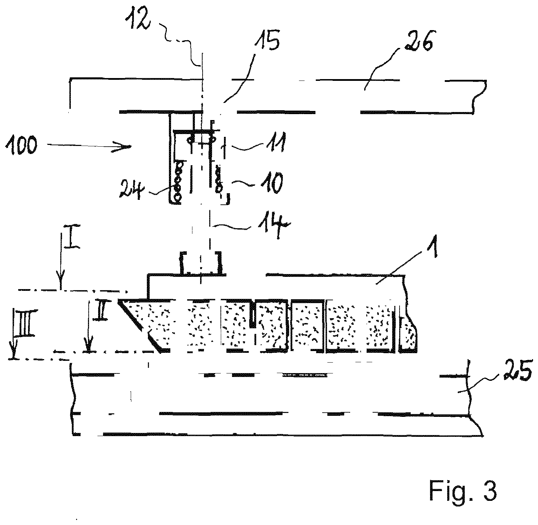

Der in Fig. 1 und 2 dargestellte Hubzylinder 100 mit den Merkmalen der vorliegenden Erfindung ist in Figur 3 in der Einbausituation dargestellt. Der Hubzylinder 100 erstreckt sich entlang einer Hubachse 12, die vertikal verläuft, und der Hubzylinder 100 ist an der Unterseite eines Drehgestells 26 eines Schienenfahrzeugs angeordnet. Der Hubzylinder 100 weist einen Zylinderkörper 10 auf, in dem ein Kolben 11 mit einer Kolbenstange 14 entlang der Hubachse 12 beweglich aufgenommen ist. Am freien Ende der Kolbenstange 14 ist eine schematisch dargestellte Magnetschienenbremse 1 angeordnet, wobei die Gewichtskraft der Magnetschienenbremse 1 über die Kolbenstange 14 und den Zylinderkörper 10 des Hubzylinders 100 aufgenommen wird, sodass die Magnetschienenbremse 1 über den Hubzylinder 100 am Drehgestell 26 gehalten ist. Die Magnetschienenbremse 1 befindet sich in einem Abstand über einer Schiene 25, auf der das Schienenfahrzeug fährt. Im Normalbetrieb des Schienenfahrzeugs wird der Abstand der Magnetschienenbremse 1 über der Schiene 25 durch den Hubzylinder 100 aufrecht erhalten, und im Fall einer Bremsung wird der Hubzylinder 100 aktiviert, sodass die Kolbenstange 14 aus dem Zylinderkörper 10 herausfährt, um die Magnetschienenbremse 1 in Kontakt mit der Schiene 25 zu bringen. Dargestellt ist lediglich ein einzelner Hubzylinder 100, wobei die Magnetschienenbremse 1 über wenigstens zwei oder mehrere Hubzylinder 100 über der Schiene 25 gehalten ist, um bei Aktivierung der mehreren Hubzylinder 100 in Kontakt mit der Schiene 25 zu gelangen.

Die gezeigte beabstandete Anordnung der Magnetschienenbremse 1 über der Schiene 25 ist mit der angehobenen Position I bezeichnet, und wird die Magnetschienenbremse abgesenkt, so wird diese in die abgesenkte Position II verfahren, wobei die beiden Hubpositionen der Magnetschienenbremse 1 über jeweilige strichpunktierte Linien dargestellt sind. Um die Magnetschienenbremse 1 in der gezeigten angehobenen Position I zu halten, muss die Gewichtskraft der Magnetschienenbremse 1 über den Hubzylinder 100 dauerhaft aufgenommen werden. Hierzu sind Möglichkeiten der Kraftaufnahme bekannt, und beispielhaft ist eine Schraubenfeder 24 gezeigt, die den Kolben 11 in die angehobene Position I kraftbeaufschlagt. Ebenso kann der Bereich unter dem Kolben 11 dauerhaft mit Druckmittel beaufschlagt werden. Bei hohen Vertikalbeschleunigungen des Schienenfahrzeugs kann es jedoch vorkommen, dass die Magnetschienenbremse 1, die mit der Aufhängung ein schwingungsfähiges System bildet, in Kontakt mit der Schiene 25 gelangt, was grundsätzlich zu vermeiden ist. Erfindungsgemäß wird hierfür eine formschließende Verbindung zwischen dem Kolben 11 und dem Zylinderkörper 10 vorgesehen, die durch Haltemittel 15 ermöglicht wird, die schematisch angedeutet im Zylinderkörper 10 angeordnet sind und die in Zusammenhang mit den Figuren 1 und 2 im Folgenden näher beschrieben wird.

Die Fig. 1 und 2 zeigen eine Querschnittsansicht eines Hubzylinders 100 mit den Merkmalen der vorliegenden Erfindung, wie dieser zur Steuerung einer Magnetschienenbremse 1 gemäß Fig. 3 eingesetzt werden kann. Der Hubzylinder 100 weist als Grundkörper einen Zylinderkörper 10 auf, der beispielhaft aus einem Rohrabschnitt 19 gebildet ist, der sich entlang der Hubachse 12 etwa rotationssymmetrisch um diese erstreckt. An einer ersten Endseite ist der Rohrabschnitt 19 durch ein Endelement 20 verschlossen, und auf der gegenüberliegenden Seite des Endelementes 20 befindet sich ein Verschlusselement 21, durch das die Kolbenstange 14 des Hubzylinders 100 hindurchgeführt ist. Mit dem freien, äußeren Ende der Kolbenstange 14 kann in nicht näher gezeigter Weise die Magnetschienenbremse 1 verbunden werden. Die Kolbenstange 14 ist mit einem Hubkolben 11 verbunden, der im Rohrabschnitt 19 des Zylinderkörpers 10 entlang der Hubachse 12 hubbeweglich geführt ist. In Fig. 1 ist der Kolben 11 in einer oberen, die Magnetschienenbremse 1 anhebenden Position I gezeigt, und in Figur 2 ist der Hubzylinder 100 mit dem Kolben 11 gezeigt, der in einer unteren, die Magnetschienenbremse absenkenden Position II dargestellt ist.

Unter dem Kolben 11 befindet sich eine Schraubenfeder 24, die den Kolben 11 in der oberen Position halten kann, sodass eine Arbeitsdruckkammer 13, die durch den Kolben 11 beweglich begrenzt ist, in der oberen Position des Kolbens 11 ein minimales Volumen aufweist. Wird die Arbeitsdruckkammer 13 über einen Druckmittelanschluss 29 druckbeaufschlagt, so wird der Kolben 11 entgegen der Federkraft der Schraubenfeder 24 nach unten gedrückt, und die Kolbenstange 14 fährt aus dem Zylinderkörper 10 heraus, sodass die Position II, wie in Figur 2 gezeigt, erreicht wird. Erst durch eine aufgebrachte Magnetkraft durch die Magnetschienenbremse 1 wird diese in Position III und damit in einen direkten Kontakt zur Schiene 25 gezogen.

Innerhalb des Zylinderkörpers 10 befinden sich Haltemittel 15, die den Kolben 11 in der oberen Position I, wie in Figur 1 gezeigt, formschließend festhalten können. Der Formschluss durch die Haltemittel 15 erfolgt dabei beispielhaft zwischen dem Kolben 11 und dem Endelement 20, an dem die Haltemittel 15 angebracht beziehungsweise an dieses angeformt sind.

Als wesentlichen Bestandteil weisen die Haltemittel 15 mehrere kugel- oder zylinderförmige Formschlusskörper 16 auf, die eine Klemmwirkung zwischen einer am Kolben 11 angebrachten Formschlussanformung 18 und einem Käfigabschnitt 23 des Endelementes 20 bilden, wobei die Formschlusskörper 16 im Käfigabschnitt 23 einsitzen. Innerhalb des Käfigabschnittes 23 ist ein als Hubkolben 17 ausgebildetes Steuerglied 17 angeordnet, das in einer die Formschlusskörper 16 in Klemmung haltenden Position gezeigt ist. Der Hubkolben 17 kann in der Hubachse 12 hin- und her bewegt werden, wofür der Hubkolben 17 in einer Hubkolbenführung 27 im Endelement 20 eingebracht ist, die in den Käfigabschnitt 23 zur Aufnahme der Formschlusskörper 16 übergeht. Beispielhaft können 10 Formschlusskörper 16 um den Außenumfang des Hubkolbens 17 herum angeordnet im Käfigabschnitt 23 aufgenommen sein, um eine entsprechend große Haltekraft zwischen dem Kolben 11 und dem Käfigabschnitt 23 zu ermöglichen.

Wird die Arbeitsdruckkammer 13 über den Druckmittelanschluss 29 mit einem Druckfluid beaufschlagt, beispielsweise mit Druckluft, so bildet sich sowohl auf der Oberseite des Kolbens 11 als auch in der gezeigten Aufnahmevertiefung 28 im Kolben 11 eine Druckerhöhung aus. Durch die Druckerhöhung in der Aufnahmevertiefung 28, die trotz des in die Aufnahmevertiefung 28 hineinragenden Käfigabschnittes 23 fluidisch mit der Arbeitsdruckkammer 13 oberhalb des Kolbens 11 kommuniziert, wird eine Steuerfläche 17a des Hubkolbens 17 druckbeaufschlagt. Dadurch wird der Hubkolben 17 in der Hubkolbenführung 27 in der Hubachse 12 nach oben bewegt, wodurch die Formschlusskörper 16 mit einem Abschnitt kleineren Außendurchmessers des Hubkolbens 17 in Kontakt kommen. Dadurch werden die Formschlusskörper 16 aus dem Formschluss mit der Formschlussanformung 18 des Hubkolbens 11 freigegeben, da sich die Formschlusskörper 16 leicht nach innen in Richtung zur Hubachse 12 bewegen können. Die Formschlussanformung 18, die als eine nach innen in die Aufnahmevertiefung 28 einragende Umlaufkante gebildet ist, wird durch die erzeugte Beweglichkeit der Formschlusskörper 16 innerhalb des Käfigabschnittes 23 freigegeben, sodass der Kolben 11 bei weiterer Druckbeaufschlagung der Arbeitsdruckkammer 13 entgegen der Kraftbeaufschlagung der Schraubenfeder 24 nach unten in die die Magnetschienenbremse 1 absenkende Position II gefahren werden kann, wie in Figur 2 dargestellt.

Wird die Arbeitsdruckkammer 13, beispielsweise nach erfolgter Bremsung durch die Magnetschienenbremse 1, wieder entlüftet, so kann der abdichtend in der Hubkolbenführung 27 geführte Hubkolben 17 durch ein Druckfederelement 22 wieder in die untere Position gedrückt werden, sodass die Formschlusskörper 16 wieder in Formschlusskontakt mit der Formschlussanformung 18 des Kolbens 11 gelangen können. Das Zurückführen des Hubkolbens 17 in die untere, formschließende Position erfolgt dadurch erst nach Erreichen der oberen Hublage des Kolbens 11, wobei der Kolben 11 durch die Schraubenfeder 24 in die obere Hublage zurückgeführt wird. Bei der Entlüftung der Arbeitsdruckkammer 13 wird ein Druckminimum erreicht, bei dem der Kolben 11 bereits wieder in die obere Hublage gedrückt wird, und erst anschließend bewegt sich der Hubkolben 17 in die formschließende, untere Position durch das Druckfederelement 22.

Der Hubkolben 17 ist über eine Hubkolbendichtung 30 abgedichtet in der Hubkolbenführung 27 aufgenommen, sodass die rückseitige Kammer 31 über einen Entlüftungskanal 32 be- und entlüftet werden kann, ohne dass ein Überdruck oder ein Unterdruck in der rückseitigen Kammer 31 erzeugt wird.

Durch die erfindungsgemäßen Haltemittel 15 wird erreicht, dass der Kolben 11 durch einen gebildeten Formschluss zum Zylinderkörper 10, insbesondere über den Käfigabschnitt 23 zum Endelement 20, in der oberen, die Magnetschienenbremse 1 anhebenden Position I gehalten wird, ohne dass ein schwingungsfähiges System über die Masse der Magnetschienenbremse 1 und die Federwirkung der Schraubenfeder 24 gebildet wird. Der besondere Vorteil der erfindungsgemäßen Ausgestaltung des Haltemittels 15 liegt dabei darin, dass das Haltemittel 15 keine zusätzlichen Mittel benötigt, um entsprechend aktiviert zu werden, da die Aktivierung des Haltemittels 15 zur Freigabe des Kolbens 11 durch den Fluiddruck in der Arbeitsdruckkammer 13 bereits erreicht werden kann. Dabei ist die Steuerfläche 17 derart mit der erforderlichen Aktivierungskraft zur Freigabe der Formschlusskörper 16 abgestimmt, dass zunächst der Hubkolben 17 die Formschlusskörper 16 freigibt, bevor der Kolben 11 gegen die Federkraft der Schraubenfeder 14 im Zylinderkörper 10 nach unten geführt wird, um die Kolbenstange 14 aus dem Zylinderkörper 10 herauszuführen. Folglich kann keine Verklemmung entstehen, da sonst bei einem überhöhten Druck in der Arbeitsdruckkammer 13 eine so starke Klemmung der Formschlusskörper 16 erfolgen würde, dass der Hubkolben 17 nicht mehr in die Freigabeposition überführt werden könnte.

### Bezugszeichenliste

- 100: Hubzylinder
- 1: Magnetschienenbremse
- 10: Zylinderkörper
- 11: Kolben
- 12: Hubachse
- 13: Arbeitsdruckkammer
- 14: Kolbenstange
- 15: Haltemittel
- 16: Formschlusskörper
- 17: Steuerglied, Hubkolben
- 17a: Steuerfläche
- 18: Formschlussanformung
- 19: Rohrabschnitt
- 20: Endelement
- 21: Verschlusselement
- 22: Druckfederelement
- 23: Käfigabschnitt
- 24: Schraubenfeder
- 25: Schiene
- 26: Drehgestell
- 27: Hubkolbenführung
- 28: Aufnahmevertiefung
- 29: Druckmittelanschluss
- 30: Hubkolbendichtung
- 31: rückseitige Kammer
- 32: Entlüftungskanal
- I: die Magnetschienenbremse anhebende Position
- II: die Magnetschienenbremse absenkende Position
- III: die Magnetschienenbremse in Kontakt mit der Schiene

## Patentansprüche

1. Hubzylinder (100) zur Betätigung einer Magnetschienenbremse (1), umfassend einen Zylinderkörper (10), in dem ein Kolben (11) in einer Hubachse (12) bewegbar ist, wobei durch den Kolben (11) eine mit Druckmittel beaufschlagbare Arbeitsdruckkammer (13) im Zylinderkörper (10) beweglich begrenzbar ist, und wobei am Kolben (11) eine Kolbenstange (14) angebunden ist, die mit einem freien Ende mit der Magnetschienenbremse (1) verbindbar ist, und wobei der Kolben (11) durch Druckbeaufschlagung der Arbeitsdruckkammer (13) von einer die Magnetschienenbremse (1) anhebenden (I) in eine die Magnetschienenbremse (1) absenkende Position (II) verfahrbar ist, **dadurch gekennzeichnet, dass** im Zylinderkörper (10) Haltemittel (15) eingebracht sind, durch die der Kolben (11) in der die Magnetschienenbremse (1) anhebenden Position (I) formschlüssig haltbar ist.

2. Hubzylinder nach Anspruch 1, **dadurch gekennzeichnet, dass** die Haltemittel (15) wenigstens einen Formschlusskörper (16) aufweisen, der zwischen einer den Kolben (11) freigebenden Position und einer den Kolben (11) haltenden Position veränderlich ist.

3. Hubzylinder nach Anspruch 2, **dadurch gekennzeichnet, dass** die Haltemittel (15) ein über einen Steuerdruck betätigbares Steuerglied (17) aufweisen, das mit dem wenigstens einen Formschlusskörper (16) zur Bildung des Formschlusses in Wechselwirkung bringbar ist.

4. Hubzylinder nach einem der vorgenannten Ansprüche, **dadurch gekennzeichnet, dass** der Kolben (11) eine Formschlussanformung (18) aufweist, die mit dem wenigstens einen Formschlusskörper (16) zur Bildung des Formschlusses in Wechselwirkung bringbar ist.

5. Hubzylinder nach einem der vorgenannten Ansprüche, **dadurch gekennzeichnet, dass** der Zylinderkörper (10) wenigstens einen Rohrabschnitt (19), ein den Rohrabschnitt (19) auf einer ersten Endseite verschließendes Endelement (20) und auf einer gegenüberliegenden zweiten Endseite unter Herausführung der Kolbenstange (14) ein den Rohrabschnitt (19) verschließendes Verschlusselement (21) aufweist, wobei die Haltemittel (15) im Endelement (20) eingebracht sind.

6. Hubzylinder nach einem der Ansprüche 3 bis 5, **dadurch gekennzeichnet, dass** das Steuerglied (17) als Hubkolben (17) ausgebildet ist, der in einer zylinderförmigen Hubkolbenführung (27) hubbeweglich geführt ist, insbesondere wobei die Hubkolbenführung (22) im Endelement (20) eingebracht ist.

7. Hubzylinder nach Anspruch 6, **dadurch gekennzeichnet, dass** das Steuerglied (17) eine Steuerfläche (17a) aufweist, die mit der Arbeitsdruckkammer (13) fluidisch kommunizieren kann, wobei die Steuerfläche (17a) durch einen Fluiddruck in der Arbeitsdruckkammer (13) mit Druck beaufschlagbar ist, wodurch der Hubkolben (17) von einer den wenigstens einen Formschlusskörper (16) sperrenden Stellung in eine den Formschlusskörper (16) freigebenden Stellung überführbar ist.

8. Hubzylinder nach einem der vorgenannten Ansprüche, **dadurch gekennzeichnet, dass** ein Druckfederelement (22) vorgesehen ist, durch das das Steuerglied (17) in die Position vorgespannt ist, in der der Formschlusskörper (16) den Kolben (11) in der die Magnetschienenbremse (1) angehobenen Position (I) hält.

9. Hubzylinder nach einem der vorgenannten Ansprüche, **dadurch gekennzeichnet, dass** mehrere Formschlusskörper (16) vorgesehen sind, die kugelförmig, zylinderförmig oder rechteckig ausgebildet sind und/oder dass die Formschlusskörper (16) Endbereiche aufweisen, die spitz oder ballig ausgebildet sind.

10. Hubzylinder nach einem der vorgenannten Ansprüche, **dadurch gekennzeichnet, dass** die Formschlusskörper (16) in einem Käfigabschnitt (23) vorzugsweise am Endelement (20) beabstandet zueinander und das Steuerglied (17) umschließend gehalten sind.

11. Hubzylinder nach einem der vorgenannten Ansprüche, **dadurch gekennzeichnet, dass** eine Schraubenfeder (24) vorgesehen ist, die den Kolben (11) in die die Magnetschienenbremse (1) angehobene Position (I) vorspannt.

## Claims

1. Lifting cylinder (100) for actuating a magnetic rail brake (1), comprising a cylinder body (10) in which a piston (11) is movable in a lifting axis (12), wherein a working pressure chamber (13), to which a pressure medium can be applied, is movably limitable in the cylinder body (10) by the piston (11), and wherein a piston rod (14) is tied on the piston (11), the piston rod (14) being connectable to the magnetic rail brake (1) with a free end, and wherein the piston (11) is movable from a position lifting (I) the magnetic rail brake (1) into a position lowering (II) the a magnetic rail brake (1) by applying pressure to the working pressure chamber (13), **characterized in that** holding means (15) are inserted in the cylinder body (10), by which the piston (11) can be positively held in the position lifting (I) the magnetic rail brake (1).

2. Lifting cylinder according to claim 1, **characterized in that** the holding means (15) have at least one positive locking body (16) which is variable between a position releasing the piston (11) and a position holding the piston (11).

3. Lifting cylinder according to claim 2, **characterized in that** the holding means (15) have a control member (17) being operable via a control pressure, which can be brought in interaction with the at least one positive locking body (16) to form the positive form locking.

4. Lifting cylinder according to one of the preceding claims, **characterized in that** the piston (11) has a positive locking moulding (18) which can be brought in interaction with the at least one positive locking body (16) to form the positive form locking.

5. Lifting cylinder according to one of the preceding claims, **characterized in that** the cylinder body (10) has at least one pipe section (19), an end member (20) closing the pipe section (19) on a first end side and on an opposite second end side a closure member (21) closing the pipe section (19) by moving out the piston rod (14), wherein the holding means (15) are inserted in the end element (20).

6. Lifting cylinder according to one of claims 3 to 5, **characterized in that** the control member (17) is designed as a reciprocating piston (17) which is guided in a cylindrical reciprocating piston guideway (27) so as to be reciprocratingly movable, in particular wherein the reciprocating piston guideway (27) is inserted in the end element (20).

7. Lifting cylinder according to claim 6, **characterized in that** the control member (17) has a control surface (17a) which can communicate fluidically with the working pressure chamber (13), wherein pressure can be applied to the control surface (17a) by a fluid pressure in the working pressure chamber (13), by which the reciprocating piston (17) can be transferred from a position blocking the at least one positive locking body (16) into a position releasing the positive locking body (16).

8. Lifting cylinder according to one of the preceding claims, **characterized in that** a pressure spring member (22) is provided, by which the control member (17) is biased in the position in which the positive locking body (16) holds the piston (11) in the position (I) having lifted the magnetic rail brake (1).

9. Lifting cylinder according to one of the preceding claims, **characterized in that** a plurality of positive locking bodies (16) are provided, which are formed spherical, cylindrical or rectangular and/or that the positive locking bodies (16) have end portions which are formed pointed or spherical.

10. Lifting cylinder according to one of the preceding claims, **characterized in that** the positive locking bodies (16) are held in a cage portion (23) spaced apart from each other preferably at the end member (20) and enclosing the control member (17).

11. Lifting cylinder according to one of the preceding claims, **characterized in that** a helical spring (24) is provided, which biases the piston (11) in the position (I) having lifted the magnetic rail brake (1).

## Revendications

1. Vérin de levage (100) destiné à actionner un frein électromagnétique sur rails (1), comprenant un corps de vérin (10), dans lequel un piston (11) est mobile dans un axe de levage (12), le piston (11) étant susceptible de délimiter de manière mobile une chambre de travail sous pression (13) pouvant être soumise à un agent sous pression dans le corps de vérin (10) et sur le piston (11) étant raccordée une tige de piston (14), qui par une extrémité libre peut se relier avec le frein électromagnétique sur rails (1) et par soumission de la chambre de travail sous pression (13) à une pression, le piston (11) étant déplaçable d'une position relevant (I) le frein électromagnétique sur rails (1) dans une position abaissant (II) le frein électromagnétique sur rails (1), **caractérisé en ce que** dans le corps de vérin (10) sont ménagés des moyens de retenue (15) par lesquels le piston (11) peut être maintenu par complémentarité de forme dans la position relevant le frein électromagnétique sur rails (1).

2. Vérin de levage selon la revendication 1, **caractérisé en ce que** les moyens de retenue (15) comportent au moins un corps à complémentarité de forme (16) qui est variable entre une position libérant le piston (11) et une position retenant le piston (11).

3. Vérin de levage selon la revendication 2, **caractérisé en ce que** les moyens de retenue (15) comportent un organe de commande (17) susceptible d'être actionné par une pression de commande, qui pour créer la complémentarité de forme, peut être amené en interaction avec l'au moins un corps à complémentarité de forme (16).

4. Vérin de levage selon l'une quelconque des revendications précédemment citées, **caractérisé en ce que** le piston (11) comporte un surmoulage à complémentarité de forme (18), qui pour créer la complémentarité de forme, peut être amené en interaction avec l'au moins un corps à complémentarité de forme (16).

5. Vérin de levage selon l'une quelconque des revendications précédemment citées, **caractérisé en ce que** le corps de vérin (10) comporte au moins un tronçon tubulaire (19), un élément d'extrémité (20) fermant le tronçon tubulaire (19) sur un premier côté extrême et sur un second côté extrême situé en vis-à-vis, en faisant sortir la tige de piston (14), un élément de fermeture (21) fermant le tronçon tubulaire (19), les moyens de retenue (15) étant ménagés dans l'élément d'extrémité (20).

6. Vérin de levage selon l'une quelconque des revendications 3 à 5, **caractérisé en ce que** l'organe de commande (17) est réalisé sous la forme d'un piston alternatif (17), qui est guidé en étant mobile en course dans un guidage (27) cylindrique de piston alternatif (27), notamment, le guidage (22) de piston alternatif (22) étant ménagé dans l'élément d'extrémité (20).

7. Vérin de levage selon la revendication 6, **caractérisé en ce que** l'organe de commande (17) comporte une surface de commande (17a) qui est apte à communiquer par fluide avec la chambre de travail sous pression (13), la surface de commande (17a) pouvant être soumise par une pression de fluide dans la chambre de travail sous pression (13) à une pression, suite à quoi le piston alternatif (17) peut être amené d'une position bloquant l'au moins un corps à complémentarité de forme (16) dans une position libérant le corps à complémentarité de forme (16).

8. Vérin de levage selon l'une quelconque des revendications précédemment citées, **caractérisé en ce qu'**il est prévu un élément à ressort de pression (22) par lequel l'organe de commande (17) est précontraint dans la position dans laquelle le corps à complémentarité de forme (16) maintient le piston (11) dans la position (I) relevant le frein électromagnétique sur rails (1).

9. Vérin de levage selon l'une quelconque des revendications précédemment citées, **caractérisé en ce que** plusieurs corps à complémentarité de forme (16) sont prévus, qui sont conçus de forme sphérique, cylindrique ou rectangulaire et/ou **en ce que** les corps à complémentarité de forme (16) comportent des zones d'extrémité qui sont conçues avec une forme pointue ou bombée.

10. Vérin de levage selon l'une quelconque des revendications précédemment citées, **caractérisé en ce que** les corps à complémentarité de forme (16) sont maintenus dans une partie de cage (23), de préférence sur l'élément d'extrémité (20) en étant écartés les uns des autres et en entourant l'organe de commande (17).

11. Vérin de levage selon l'une quelconque des revendications précédemment citées, **caractérisé en ce qu'**il est prévu un ressort hélicoïdal (24) qui précontraint le piston (11) dans la position (I) relevant le frein électromagnétique sur rails (1).
